# FASCICULE DE BREVET EUROPEEN

(11) **EP 3 769 978 B1**
(45) Date de publication et mention de la délivrance du brevet: **14.09.2022**
(21) Numéro de dépôt: 20020263.8
(22) Date de dépôt: 28.05.2020
(51) Int. Cl.: B60C 23/04, B60B 19/00, B60C 23/00, B60C 23/12, B60C 23/10

(54) **JANTE MULTIFONCTIONS AUTONOME ASSOCIÉE À UN SYSTÈME DE CONTRÔLE À DISTANCE**
AUTONOME MULTIFUNKTIONSFELGE IN VERBINDUNG MIT EINEM FERNSTEUERUNGSSYSTEM
AUTONOMOUS MULTIFUNCTIONAL RIM ASSOCIATED WITH A REMOTE CONTROL SYSTEM

(30) Priorité: 29.06.2019 FR 1907226
(43) Date de publication de la demande: 27.01.2021
(73) Titulaire: Versluys, Arnaud, 33160 Saint Medard en Jalles (FR)
(72) Inventeur: Versluys, Arnaud, 33160 Saint Medard en Jalles (FR)

(56) Documents cités:
- WO-A1-2016/178137
- WO-A1-2018/117828
- FR-A1- 2 986 642
- US-A1- 2017 015 147
- US-A1- 2019 047 339

## Description

La présente invention concerne une jante de roue de véhicule intégrant un dispositif multifonctions autonome pilotable et contrôlable à distance par smartphone en totale indépendance du véhicule.

Elle comprend plusieurs systèmes caractérisant le dispositif multifonctions et réalisant les fonctions de contrôle automatique, d'angle mort, d'aide au stationnement latéral, de gonflage / dégonflage du pneu associé à la jante et de contrôle automatique de pression du pneu.

Les jantes connues associées à plusieurs systèmes centralisés sur le véhicule peuvent présenter les fonctions de régulation de pression, mesure de pression, d'aide au stationnement latéral et de contrôle d'angle mort.

Un compresseur peut, par exemple, être monté dans le véhicule et fournir l'air au pneu en utilisant des conduits d'air courant dans l'arbre des roue pouvant ainsi transférer l'air vers la roue en rotation via une pièce jointée en rotation.

Ce besoin se ressent particulièrement pour les utilisateurs faisant des changements de type de voie régulièrement. Dans ce cas, l'adaptation de pression des pneus est nécessaire autant d'un point de vue sécuritaire de tenue de route, que d'efficacité des pneus sur voie abîmée/trempée ou que d'économie de carburant réalisé avec des pneus gonflés de façon adaptée.

Un dispositif de contrôle d'angle mort et d'aide au stationnement latéral est monté généralement sous la forme d'un capteur situé au niveau des rétroviseurs latéraux et feux arrière.

Ces fonctions sont de plus en plus plébiscitées par les utilisateurs d'une part d'un point de vue sécuritaire concernant le contrôle d'angle mort. L'utilisateur peut ainsi agir en souplesse en cas de doublement non visible d'un véhicule à pleine vitesse. D'autre part, d'un point de vue d'aisance pour les utilisateurs roulant notamment en environnement urbain 3 du fait de la difficulté de se garer sur des places de parking réduites, près du mur, de trottoirs 3a hauts ou bien de bornes 3b trop basses et non visibles par les fenêtres. Cela oblige souvent l'utilisateur ou un passager à descendre pour ne pas abîmer le pneu en montant sur le trottoir ou ne pas abîmer le véhicule en le frottant.

Ces dispositifs peuvent être centralisés sur le véhicule, directement intégrés et pilotables sur le tableau de bord et ainsi être alimentés par la batterie du véhicule.

De tels dispositifs nécessitent une complète intégration au véhicule et sont prévus en option lors de la fabrication du véhicule. De plus, ils nécessitent des frais d'entretien/maintenance supplémentaires, ainsi qu'une consommation plus élevée de carburant due à la friction en rotation de la pièce jointée indispensable à la transmission d'air au pneu.

Il existe également d'autres dispositifs déportés à rajouter dans le véhicule réalisant ces fonctions séparément. Ils nécessitent généralement :
- Une action manuelle de l'utilisateur, qui peut, par exemple devoir sortir du véhicule pour gonfler ses pneus avec un compresseur standard.
- Une alimentation faisant appel à la batterie du véhicule ou à un dispositif d'alimentation sans fil dont une première partie est montée sur le véhicule associé et une seconde partie est montée sur la jante. Par exemple, un capteur de stationnement est rajouté sur le véhicule dont le CPU associé est généralement relié aux câbles électriques des phares arrière. Le diminutif CPU est une abréviation du mot « computer » signifiant « microprocesseur », ce terme sera donc ainsi utilisé tout au long du document pour désigner le terme de microprocesseur.
- Un ou plusieurs écrans supplémentaires avec interface spécifique entraînent vite, pour chaque fonction, une surcharge d'éléments d'affichage sur le tableau de bord ainsi qu'un montage difficile, long, voire impossible en fonction du véhicule.

Dans le document de brevet mondial WO 2016/178137 A1, parmi les applications connues de l'art, l'invention décrit un accessoire de jante pouvant libérer un produit ou un fluide dans le pneu. L'accessoire se présente sous la forme d'un boitier conteneur monté sur la jante et en communication fluidique permanente avec le pneu. Cependant, cet accessoire ne renouvelle pas le fluide ou le produit qu'il contient de façon autonome et automatique. Il nécessite donc une action de l'utilisateur pour ce faire.

Dans le document de brevet américain US 2019/047339 A1, il est décrit un système et un procédé de gonflage de pneu. Le système de gonflage comporte entre autre un mécanisme d'entraînement couplé de manière rotative à la roue ayant pour fonction principale de traduire un mouvement de rotation en une force de pompage. Ce principe rend le système inutilisable sans rotation de la roue et donc sans mouvement préalable ou récent du véhicule.

Dans le document de brevet français FR 2 986642 A1 l'invention concerne un dispositif intégré notamment dans un smartphone afin de récupérer les données d'un véhicule permettant ainsi de déterminer l'état de fonctionnement du dit véhicule automobile. Ce dispositif a pour objectif de le notifier à son utilisateur. En revanche, il ne permet pas, via le même dispositif, d'agir directement sur les données réceptionnées pour modifier l'état de fonctionnement du véhicule automobile.

Parmi les systèmes connus, il est décrit dans le document de brevet américain US 2017/015147 A1 des systèmes permettant le gonflage d'un pneu entièrement intégrés dans une roue. Les systèmes consistent en l'utilisation de pompes et de générateur entraînés par gravité. Ces systèmes nécessitent donc obligatoirement la rotation de la roue afin de faire varier la direction de la gravité pour fonctionner, ce qui le rend inutilisable sans mouvement préalable ou récent du véhicule.

Dans le document de brevet mondial WO 2018/117828 A1 parmi les applications connues de l'art, il est décrit une roue intégrant un dispositif de gonflage du pneu. Le dispositif de gonflage est composé principalement d'un compresseur situé dans le moyeu de la roue et est associé à un réservoir situé dans la jante. Ce dispositif de gonflage nécessite de fait un moyeu de roue spécifique qui, dans le cas d'un véhicule automobile, se situe sur le véhicule. Dans le cas d'un véhicule automobile, cette roue n'est donc pas en totale autonomie vis-à-vis du véhicule et nécessite de plus l'usage d'un réservoir pour réaliser la fonction de gonflage.

De ce fait, de manière générale, les dispositifs actuels nécessitent à minima une dépendance énergétique et/ou mécanique au véhicule, une utilisation régulière du véhicule, une surcharge probable du tableau de bord et une intégration difficile de l'ensemble de ces fonctions sur des véhicules sans options supplémentaires ou sur des véhicules plus anciens.

Ainsi, l'invention « Jante multifonctions » telle que définie dans la revendication 1, les revendications dépendantes présentant des caractéristiques avantageuses, résout ces problèmes techniques en apportant, pour tout véhicule, les mêmes fonctionnalités que les systèmes déportés ou centralisés actuellement disponibles sur le marché, et ceci sans les contraintes d'une adaptation, d'un rajout, ou d'une intégration même partielle dans le véhicule ou bien d'une utilisation spécifique de celui-ci.

A cet effet, proposer une jante multifonctions autonome, en totale indépendance du véhicule et contrôlable à distance présente donc un fort intérêt.

Les paragraphes suivants ne sont pas destinés à limiter la portée de la présente invention et ne sont uniquement destinés qu'à des fins d'illustration. Ainsi, il peut apparaître à partir de la lecture et de la description explicative qui va suivre faite en référence aux dessins fournie ici, d'autres avantages et domaines d'applicabilités :
[Fig. 1] est une illustration simplifiée du fonctionnement et des objectifs de l'invention intégrée sur la jante.
[Fig. 2] est un schéma fonctionnel du mode de réalisation de l'invention représentant l'alimentation électrique des composants, le circuit de commande des divers systèmes, le circuit de l'air compressé, ainsi que la communication sans fil.
[Fig. 3] représente les vues des faces internes et externes de la jante montrant en outre, comment les divers systèmes et composants du dispositif multifonctions peuvent être intégrés sur la jante.
[Fig. 4] est une vue en perspective simplifiée d'une partie de la jante illustrant un emplacement de montage et un système de fixation possible pour l'un des boîtiers intégrant une partie du dispositif.
[Fig. 5] présente la vue en coupe d'un des boîtiers intégrant une partie du dispositif.
[Fig. 6] est une vue en coupe illustrant l'intégration du système de charge électrique dans un des boîtiers monté sur la jante.
[Fig. 7] est une schématisation simple de l'interface de l'application mobile.
[Fig. 8] est une illustration destinée à mettre en évidence la zone d'équilibrage de la jante.

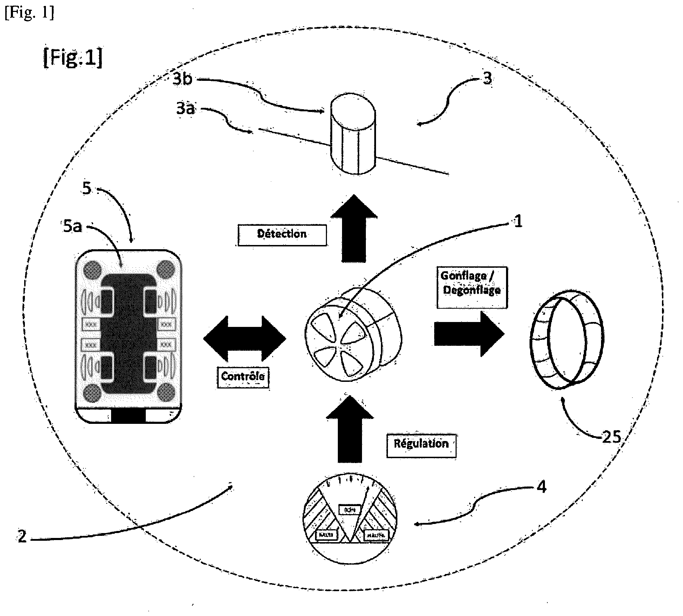

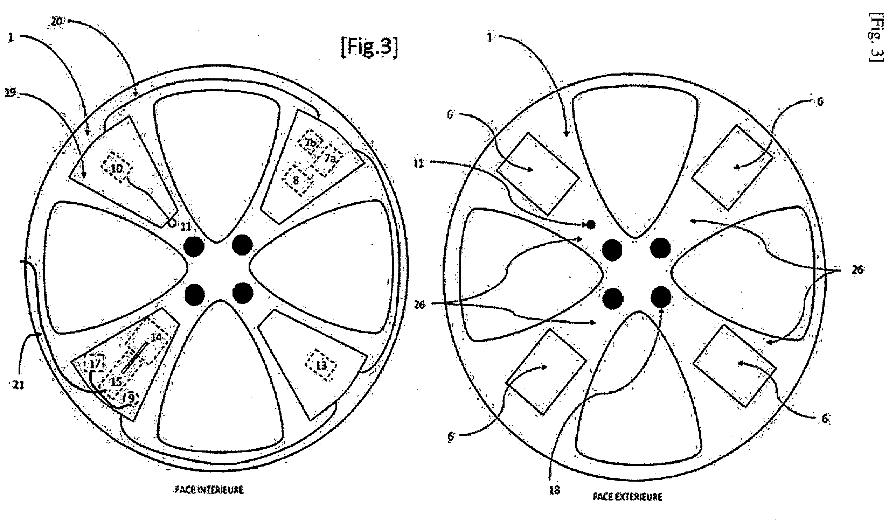

Selon les figures 1 et 3, est illustré un mode de réalisation d'une jante multifonctions 1 (rappelée ensuite simplement « jante ») intégrant un dispositif multifonctions 2 (rappelée ensuite simplement « dispositif ») et contrôlable par smartphone 5 d'aide au stationnement, de contrôle d'angle mort, de régulation de pression, de gonflage et de dégonflage du pneu 25 associé à la jante 1.

Tel qu'il est illustré, le dispositif est entièrement intégré sur la jante 1 sans aucune modification ou apport ni sur le véhicule associé ni sur le système/moyen de fixation du moyeu 18 de la roue du véhicule. Cette indépendance le rend apte à s'adapter à plusieurs roues d'un même véhicule et à tout type de véhicule.

La jante 1 se compose de deux faces, une face dénommée « face intérieure » et une face dénommée « face extérieure ».

La face intérieure correspond à la surface verticale de la jante non visible du point de vue d'un passant à l'extérieur du véhicule.

La face extérieure concerne la surface verticale de la jante visible du point de vue d'un passant à l'extérieur du véhicule.

La localisation et le nombre des perçages du système de fixation de la jante 1 sur le moyeu 18 au nombre de 4 n'est que représentatif et ne limite pas l'adaptation de la jante 1 à une configuration différente de perçages.

Selon le véhicule, la jante 1 doit respecter diverses spécifications du constructeur. De ce fait, le déport de la jante 1 n'influant pas sur le dispositif multifonctions 2, il peut être adapté sans aucune influence. Le diamètre sera adapté au besoin du véhicule et peut influencer le design de la face extérieure de la jante 1.

La jante 1 se constitue de plusieurs branches 26 ici représentées à 4 branches dont le nombre représenté n'est pas limitatif et peut être changé en fonction du diamètre de la jante.

Les branches 26 sont chacune conçues de façon à former un espace sur la face intérieure de la jante 1 pouvant contenir un boîtier 19, l'implémentation dans les branches n'est pas obligatoire tant qu'un espace est situé sur la face intérieure.

Le schéma 2 représente, dans un but de compréhension, une seule jante multifonctions 1 associée au smartphone. Cette représentation n'est pas limitative et plusieurs jantes 1 peuvent être simultanément montées sur les roues d'un même véhicule. Ainsi, tel qu'il le sera détaillé dans les paragraphes suivants, l'utilisateur aura alors le contrôle de l'ensemble des jantes 1 en même temps.

Comme le montrent les figures 3 à 6, les boîtiers montés sur la face intérieure de la jante 1 situés dans les espaces créés derrière les branches 26 se composent d'une partie support 19b et une partie couvercle 19a contenant les divers composants nécessaires au dispositif multifonctions 2 leur assurant une protection globale.

Les boîtiers 19, au nombre de quatre sur le dessin, peuvent intégrer chacun des sous-ensembles de composants distincts associés à une connectique 27. La dissociation du dispositif en plusieurs sous-ensembles intégrés dans les boîtiers, permet de cibler plus facilement l'origine de la panne d'un composant. Ainsi, dans une volonté de faciliter le rechange des pièces et la maintenance par l'utilisateur, le boîtier 19 complet, incluant les composants à l'intérieur, est échangeable avec un boîtier 19 neuf, incluant des composants neuf.

C'est pourquoi, d'une part la connectique 12 est simple et détachable manuellement. D'autre part, les boîtiers 19 sont maintenus sur la jante 1 par le système de fixation 22 pouvant être démonté avec des outils standards et disponibles sur le marché ou fournis avec la jante 1. Le nombre de boîtiers 19 peut, bien entendu, être différent en fonction de la géométrie globale de la jante 1.

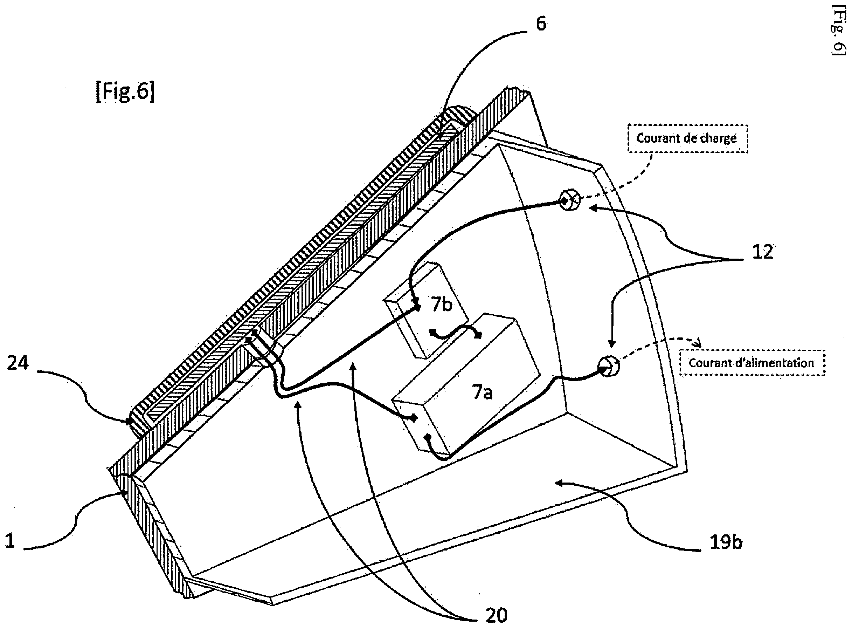

Dans l'exemple de la figure 6, le mode de réalisation du dispositif multifonctions 2 comprend un sous-système d'alimentation et de rechargement électrique entièrement monté sur la jante 1. Les panneaux photovoltaïques 6, chacun d'une puissance d'environ 1.5W assurent une recharge permanente lorsque le véhicule est en extérieur en journée. Les dimensions et la puissance des panneaux photovoltaïques 6 peuvent-être d'autant plus grandes si le diamètre de jante 1 est grand.

Leurs positions sur la face extérieure de la jante 1 les mettent en proies aux risques de chocs et de rayures. Ainsi une fine protection transparente 24, d'environ 3mm d'épaisseur et collée sur le panneau photovoltaïque 6, en assure une très bonne résistance sans perte importante d'efficacité.

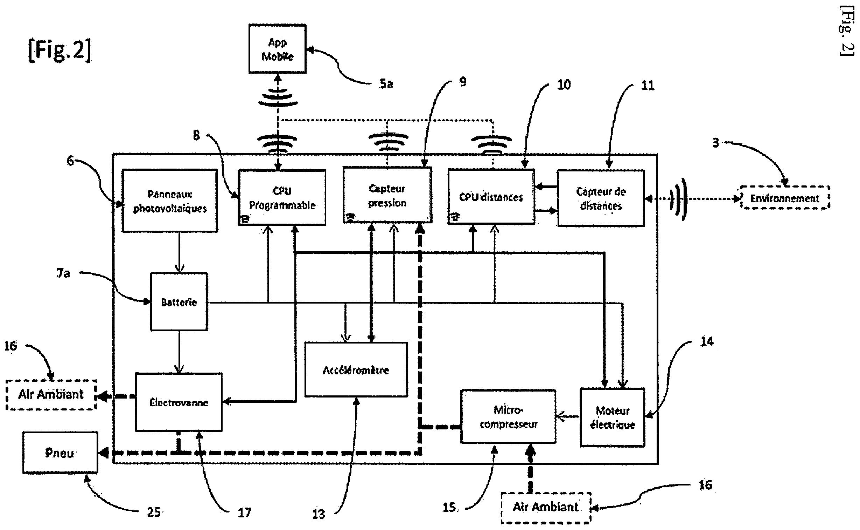

Les autres composants du système sont intégrés dans un des boîtiers 19, le câblage 20 aux normes électrique IP65 transfère le courant de charge vers un régulateur 7b associé à une batterie 7a permettant alors de stocker le courant nécessaire à l'utilisation des divers systèmes du dispositif multifonctions 2 présenté en figures 2 et 3. Les tensions utilisées, d'une mesure de 12V et 5V, sont en l'état actuel les tensions les plus simples et efficaces. Elles peuvent évoluer indépendamment des capacités fonctionnelles du dispositif. L'énergie ainsi accumulée est tout à fait apte à être utilisée pour tout autre système ou composant qui peut être rapporté au dispositif tel un système de LED ou de capteurs supplémentaires.

Dans la figure 3, le boîtier 19 qui constitue le système d'aide au stationnement et de contrôle d'angle mort comporte le CPU 10 (par la suite appelé « CPU distance »). Le « CPU distances » 10 est associé au capteur de distances 11 fixé sur la face intérieure de la jante 1 au niveau d'un perçage situé près du centre de la jante. Le capteur traverse le perçage et est orienté perpendiculairement au plan vertical de la jante vers l'extérieur.

La figure 2 illustre le système d'aide au stationnement et de contrôle d'angle mort entièrement alimenté par la batterie 7a. Il démarre automatiquement au démarrage de l'application mobile 5a procurant ainsi à l'utilisateur les fonctions d'aide au stationnement et de surveillance d'angle mort permanentes et automatiques.

Le « CPU distance » transmet par communication sans fil l'information directement à l'application mobile 5a. En effet, bien qu'approfondi par la suite dans les prochains paragraphes, le dispositif multifonctions 2 fournit à l'utilisateur via l'application mobile 5a, un avertissement visuel et sonore de surveillance d'angle mort et d'aide au stationnement.

De manière générale, les radars de stationnement conventionnels ne permettent pas la surveillance des côtés du véhicule et l'utilisateur doit sortir du véhicule s'il veut se garer sur des emplacements difficiles (par exemple dans un environnement 3 urbain illustrés en figure 1).

L'avertissement d'angle mort ne permet pas de remplacer un contrôle visuel de l'utilisateur mais l'alerte visuelle est une sécurité supplémentaire non négligeable facilitant la prise d'information par l'utilisateur (par exemple, en cas de dépassement d'un véhicule rapide venant de l'arrière et nécessitant un redressement rapide de direction du véhicule) et lui permettant alors de s'exécuter avec plus de souplesse.

Ainsi, à l'approche de tout corps (notamment d'un véhicule), l'application mobile 5a peut émettre une alerte visuelle sous la forme d'un voyant s'allumant à partir d'une première distance appelée « distance d'angle mort » pouvant capter un corps. Une seconde alerte répétitive et évolutive à la fois sonore et visuelle se déclenche à partir d'une seconde distance inférieure à la première appelée « distance parking » pouvant capter un corps. Les alertes décrites peuvent bien entendu se présenter sous d'autres formes et être associées à une caméra. Les alertes doivent permettre à l'utilisateur de prévoir la distance par rapport à un corps en approche en angle mort. Elles permettent également une aide au stationnement. Les paragraphes suivants développeront plus en détails les alertes ainsi que leur format.

Les figures 2 et 3 montrent le système de gonflage du pneu 25 incorporé dans un boîtier 19. Il comporte un moteur électrique 14 relié à un micro-compresseur 15 mettant sous pression l'air ambiant 16 vers le pneu 25.

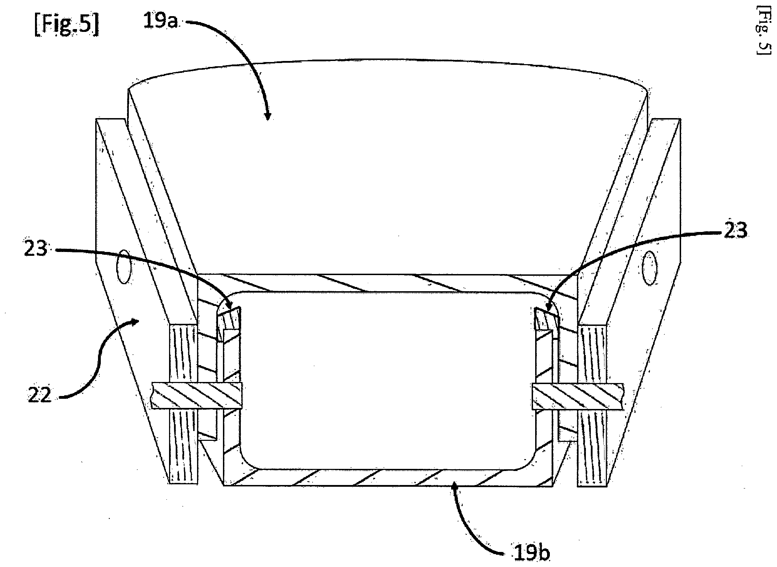

Sur la figure 5, le boîtier, n'étant pas complètement étanche et permettant le passage de l'air extérieur ambiant, un système de filtration d'air 23 peut être inclus, afin de retenir significativement les impuretés de l'air ambiant 16 qui rentrent dans le boîtier. Bien que représenté entre les parois de la partie support 19b et la partie couvercle 19a, le filtre 23 peut tout à fait être en partie ou entièrement situé à l'intérieur du boîtier 19.

De plus, un système de dégonflage est inclus sous la forme d'une électrovanne 17 située en aval du microprocesseur 8 (par la suite appelé « CPU programmable ») et piloté électriquement pour permettre l'échappement de l'air sous pression du pneu 25.

Un flexible 21 de gonflage souple à embout standard assure l'accès d'air directement entre le micro-compresseur 15, l'électrovanne 17, le capteur de pression sans fil 9 et la chambre à air du pneu 25. L'embout du tuyau est standard permettant un branchement/débranchement du dispositif 2 sur valve standard à la convenance de l'utilisateur. Ainsi, dans un but sécuritaire et en cas de nécessité, telle une panne du dispositif 2, l'utilisateur a l'accès pour brancher un compresseur standard.

Dans le même esprit, une soupape mécanique pouvant être intégrée à l'électrovanne 17 ou en aval du micro-compresseur 15, assure une libération d'air automatique de sécurité dès le dépassement d'une haute valeur de pression.

Le schéma fonctionnel, présenté en figure 2, met en évidence un système de sécurité supplémentaire sous la forme d'un détecteur de mouvement de la jante 1, pouvant être par exemple un accéléromètre 13 situé en aval du CPU programmable 8. Le CPU programmable 8 peut automatiquement interrompre les transmissions électriques et assurer le blocage des fonctions de gonflage/dégonflage en cas de tout mouvement et/ou de rotation perçu de la jante 1 par l'accéléromètre 13 prévenant ainsi de tout risque de gonflage/dégonflage intempestif. L'accéléromètre 13 peut aussi être capable de mesurer les vibrations dans la jante 1 pendant le roulage et permettre ainsi au CPU programmable 8 de détecter automatiquement le type de voie pour la transmettre à l'application mobile 5a.

Comme détaillé dans les paragraphes suivants, le dispositif multifonctions 2 permet à l'utilisateur de contrôler à distance l'ensemble des fonctions, dont la fonction de gonflage/dégonflage. De plus, un système de régulation et de notification informe l'utilisateur en cas de mauvaise pression d'un pneu, pouvant nuire à la tenue de route du véhicule et peut le conseiller sur une pression adéquate notamment en fonction du type de voie déterminé par le CPU programmable 8. De ce fait, l'utilisateur n'a pas besoin de brancher une arrivée d'air ou de sortir du véhicule pour gonfler/dégonfler chacun des pneus 25 jusqu'à la pression souhaitée en cas notamment de changement de type de voie ou de mauvaise pression constatée.

Ainsi, comme le détaille la figure 2, un capteur de pression sans fil 9 mesure la valeur de pression du pneu 25 et fournit l'information en permanence à l'utilisateur via l'application mobile 5a.

Dans ce mode de réalisation, le dispositif multifonctions 2 est entièrement utilisable et contrôlable à distance par l'utilisateur par communication sans fil via l'application mobile 5a disponible sur smartphone 5 assurant une indépendance complète vis-à-vis du véhicule. Cependant, cette solution n'est pas limitative et bien entendu ne dispense pas de la possibilité d'une intégration supplémentaire possible au logiciel de bord du véhicule pour permettre un contrôle de la part de l'utilisateur directement depuis l'ordinateur de bord du véhicule.

Le smartphone de l'utilisateur utilise le CPU programmable 8 monté sur la jante 1 comme émetteur/récepteur de communication sans fil.

A travers l'application mobile 5a, le CPU programmable 8 peut émettre ou recevoir des commandes et des données sous forme de signaux électriques d'entrée/sortie de chacun des systèmes. En effet, il permet de recevoir, dès l'ouverture de l'application mobile 5a, pour chaque roue associée au véhicule, des signaux entrants permanents des capteurs de pression sans fil 9 et des « CPU distances » 10. Il peut, à la demande de l'utilisateur, générer des signaux de sortie pour commander d'une part, le fonctionnement du moteur électrique 14 afin de gonfler le pneu 25 et, d'une autre part, l'électrovanne 17 de déchargement d'air contenu dans le pneu 25. Le CPU programmable 8 et l'application mobile 5a sont adaptables et peuvent sans problème fournir et recevoir d'autres types de données telles que la pression atmosphérique, les vibrations dans la jante, la vitesse de rotation des roues, la température, l'humidité, le courant de recharge à tout instant.

Le smartphone 5 utilise le protocole de communication sans fil bluetooth ou tout autre protocole sans fil adéquat pour communiquer directement avec le CPU programmable 8 intégré à chaque jante 1 monté sur le véhicule. Le smartphone 5 peut aussi communiquer similairement et directement avec d'autres systèmes ou composant faisant partie du dispositif multifonctions 2.

L'application mobile 5a créée pour l'invention est entièrement dédiée au dispositif multifonctions 2.

Elle présente un système d'appariement unique à chaque jante 1, par exemple en utilisant la technologie de QR-code directement sur l'application 5a. Cela permet à l'utilisateur d'associer une ou plusieurs roues de son véhicule sur lesquelles la jante 1 est montée. L'application 5a permet ainsi le contrôle d'un ou plusieurs dispositifs multifonctions 2 sur un seul écran déporté 5.

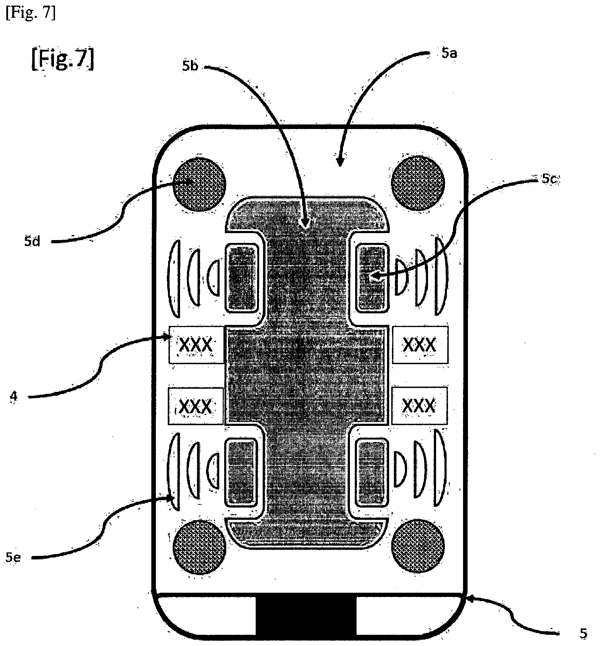

Tel que le montre la figure 7, après appariement les jantes 1 apparaissent sur l'application mobile 5a. Une schématisation du véhicule 5b permet à l'utilisateur une compression logique et rapide de la localisation de chacune de ses jantes 1 grâce à une schématisation 5c des jantes. A côté de chaque schématisation 5c des jantes, un indicateur 4 précisera la pression du pneu monté sur la jante 1 associé, permettant à l'utilisateur une visualisation en temps réel pour l'ensemble des jantes 1. L'indication de pression peut éventuellement être associée ou simplifiée à un code couleur.

Une lumière rouge s'affichera sur une partie de l'écran afin de mettre clairement en évidence l'entrée d'un corps dans le périmètre de la « distance angle mort » devant la jante. La lumière rouge peut être localisée à côté de la schématisation 5c de la jante ayant détecté l'obstacle afin d'aider l'utilisateur à la prise d'information et ainsi localiser la direction du potentiel danger.

Le signal d'aide au stationnement peut combiner une alerte sonore répétitive et visuelle 5e. Dans les deux cas, les alertes sont évolutives en fonction de la distance entre la jante 1 et le corps capté. Les alertes se déclenchent à toute entrée d'un corps dans le périmètre de la « distance parking » devant l'une des jantes 1 appareillée. De ce fait, plus le corps sera proche et plus l'alerte sonore, sous la forme d'un « bip », aura un cycle de répétition court. L'alerte visuelle 5e se présente sous la forme de plusieurs barres situées au niveau de la jante ayant capté le corps et présentant un dégradé de couleurs en fonction de la distance par rapport au corps.

Un processus de notification peut être fourni par l'application 5a pour permettre d'informer l'utilisateur ou de lui donner des conseils automatiquement sur la pression de pneu adéquate en fonction de la voie pratiquée ou des conditions météorologiques. Des notifications supplémentaires peuvent être intégrées sans limitation à l'application mobile 5a pour permettre d'informer automatiquement l'utilisateur sur diverses informations/conseils pouvant aider ou détériorer les conditions de conduite.

Un cercle faisant office de bouton 5d situé à côté de chaque jante 5a permettra de gonfler ou de dégonfler la jante 5a associé.

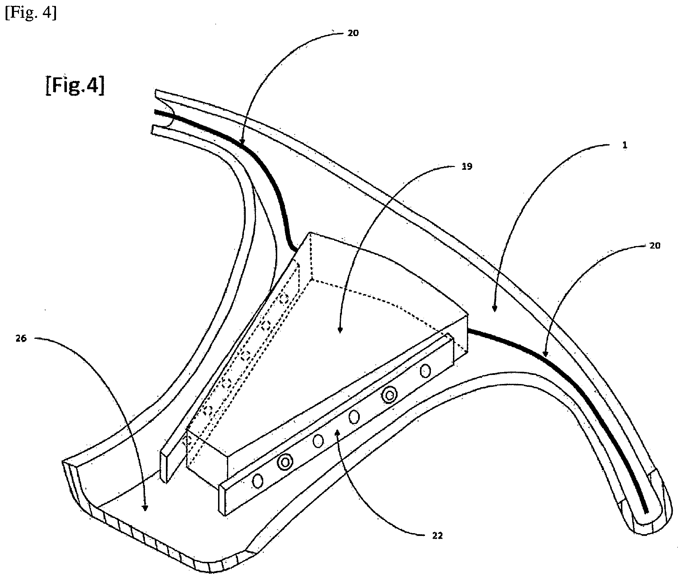

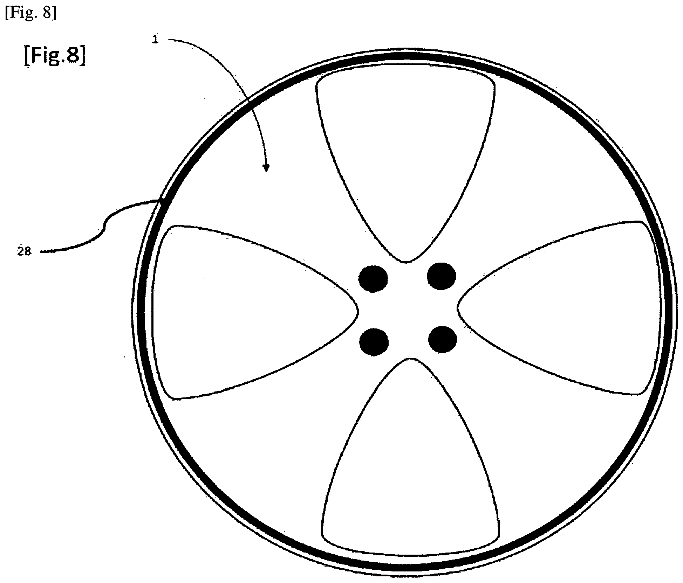

La figure 8 met en évidence la zone préférentielle pour l'équilibrage de roue. Cette zone circulaire concerne le renfoncement créé par le pli sur la bordure extérieure de la face intérieure de la jante 1 visible en figure 4. Sa disposition permet de garantir un équilibrage fin.

Les exemples illustrent les divers modes de réalisation et ne sont pas destinés à limiter la présente description. Par conséquent, la description doit être interprétée de manière large, avec uniquement les limitations nécessaires et pertinentes compte tenu de l'état de la technique. La présente invention est définie par l'étendue des revendications.

## Revendications

1. Jante multifonctions (1) autonome associée à un système de contrôle à distance, utilisable en totale indépendance et sur tout type de véhicule, **caractérisée en ce qu'**elle comprend : une application mobile (5a) dédiée ; un système de rechargement électrique ; un système d'aide au stationnement et de contrôle d'angle mort ; un système de gonflage de pneumatique ; un système de dégonflage ; un système de sécurité de mouvement et de notifications ; et un système de contrôle à distance par smartphone (5).

2. Jante multifonctions (1) autonome associée à un système de contrôle à distance qui selon la revendication 1 est **caractérisée en ce qu'**un micro-processeur (8) programmable, situé sur la jante (1) assure un contrôle et une communication sans fil entre les divers systèmes et le smartphone (5) de l'utilisateur.

3. Jante multifonctions (1) autonome associée à un système de contrôle à distance qui selon la revendication 1 est **caractérisée en ce qu'**une application mobile (5a) dédiée et associé à un dispositif multifonction (2) notifie en temps réel la pression des pneus, l'aide au stationnement et le contrôle d'angle mort et permet le contrôle à la demande pour gonfler ou dégonfler le pneu (25).

4. Jante multifonctions (1) autonome associée à un système de contrôle à distance qui selon la revendication 1 est **caractérisée en ce qu'**un système de rechargement électrique photovoltaïque (6) d'une batterie (7a), est entièrement situé sur la jante (1) et dont au moins une partie est située sur la face intérieure et non visible d'un point de vue extérieur.

5. Jante multifonctions (1) autonome associée à un système de contrôle à distance qui selon la revendication 1 est **caractérisée en ce qu'**un capteur de distances (11) traversant l'épaisseur de la jante (1) et monté perpendiculairement au plan vertical de la jante vers l'extérieur, permet de détecter tout corps en approche devant la jante (1) et d'en informer l'application mobile (5a) par communication sans fil directement via le CPU (10) associé.

6. Jante multifonctions (1) autonome associée à un système de contrôle à distance qui selon la revendication 1 est **caractérisée en ce que** dans un des boîtiers (19), un filtre à air (23), un moteur électrique (14) pilotable à distance et un micro-compresseur (15) permet le gonflage du pneu (25) avec l'air ambiant (16).

7. Jante multifonctions (1) autonome associée à un système de contrôle à distance qui selon la revendication 1 est **caractérisée en ce qu'**un capteur de pression sans fil (15) permet de mesurer la pression d'air du pneu (25) monté sur la jante (1) et d'informer directement l'application mobile (5a) par communication sans fil.

8. Jante multifonctions (1) autonome associée à un système de contrôle à distance qui selon la revendication 1 est **caractérisée en ce qu'**une électrovanne (17), montée en aval du CPU programmable (8) et relié au flexible de gonflage (21), permet une libération contrôlée de l'air sous pression dans le pneu (25).

9. Jante multifonctions (1) autonome associée à un système de contrôle à distance qui selon la revendication 1 est **caractérisée en ce qu'**en outre et selon la revendication 8, le CPU programmable (8) peut bloquer l'ensemble des systèmes grâce à un accéléromètre (13) situé en aval et l'informant de tout mouvement de la jante (1).

10. Jante multifonctions (1) autonome associée à un système de contrôle à distance qui selon la revendication 1 est **caractérisée en ce que** des espaces sur la face intérieure de la jante peuvent contenir des boîtiers (19) détachables par l'utilisateur et non visible d'un point de vue extérieur.

## Patentansprüche

1. Autonome Multifunktions felge (1), verbunden mit einem Fernsteuersystem, verwendbar in völliger Unabhängigkeit und auf jedem Fahrzeugtyp, **dadurch gekennzeichnet, dass** sie umfasst: eine dedizierte mobile Anwendung (5a); ein elektrisches Ladesystem; ein Einparkhilfe- und Kontrollsystem für tote Winkel; ein Reifenfüllsystem; ein Deflationssystem; ein Bewegungssicherheits- und Benachrichtigungssystem; und ein Smartphone-Fernbedienungssystem (5).

2. Autonome Multifunktions felge (1), die einem Fernsteuersystem zugeordnet ist, das nach Anspruch 1 **dadurch gekennzeichnet ist, dass** ein programmierbarer Mikroprozessor (8), der sich auf der Felge (1) befindet, die Steuerung und drahtlose Kommunikation zwischen den verschiedenen Systemen bereitstellt und die Smartphone (5) des Benutzers.

3. Autonome Multifunktions felge (1), die einem Fernsteuersystem zugeordnet ist, das nach Anspruch 1 **dadurch gekennzeichnet ist, dass** eine mobile Anwendung (5a), die einem Multifunktionsgerät (2) zugeordnet und zugeordnet ist, in Echtzeit den Reifendruck, das Parken mitteilt Unterstützung und Kontrolle des toten Winkels und ermöglicht eine bedarfsgesteuerte Steuerung zum Aufpumpen oder Ablassen des Reifens (25).

4. Autonome Multifunktions felge (1) verbunden mit einem Fernsteuerungssystem, das nach Anspruch 1 **dadurch gekennzeichnet ist, dass** ein photovoltaisches elektrisches Wiederaufladesystem (6) einer Batterie (7a) vollständig auf der Felge (1) angeordnet ist und von denen sich zumindest ein Teil auf der Innenseite befindet und von außen nicht sichtbar ist.

5. Autonome Multifunktions felge (1) verbunden mit einem Fernsteuerungssystem, das nach Anspruch 1 **dadurch gekennzeichnet ist, dass** ein Abstandssensor (11) durch die Dicke der Felge (1) verläuft und senkrecht zu der vertikalen Ebene der Felge nach außen, ermöglicht es, sich vor der Felge (1) nähernde Körper zu detektieren und per drahtlose Kommunikation direkt über die zugehörige CPU (10) der mobilen Anwendung (5a) mitzuteilen.

6. Autonome Multifunktions felge (1) verbunden mit einem Fernsteuersystem, das nach Anspruch 1 **dadurch gekennzeichnet ist, dass** in einem der Kästen (19) ein Luftfilter (23) ein fernsteuerbar Elektromotor (14) und ein Mikrokompressor (15) ermöglicht das Aufblasen des Reifens (25) mit Umgebungsluft (16).

7. Autonome Multifunktions felge (1) verbunden mit einem Fernsteuersystem, das nach Anspruch 1 **dadurch gekennzeichnet ist, dass** ein drahtloser Drucksensor (15) es ermöglicht, den Luftdruck des auf der Felge montierten Reifens (25) zu messen (1) und informieren direkt die mobile Anwendung (5a) durch drahtlose Kommunikation.

8. Autonome Multifunktions felge (1), die einem Fernsteuersystem zugeordnet ist, das nach Anspruch 1 **dadurch gekennzeichnet ist, dass** ein Magnetventil (17), das stromabwärts der programmierbaren CPU (8) montiert und betrefft mit dem Füllschlauch (21) verbunden ist, ermöglicht das kontrollierte Ablassen von Druckluft im Reifen 25.

9. Autonome Multifunktions felge (1), die einem Fernsteuerungssystem zugeordnet ist, das nach Anspruch 1 **dadurch gekennzeichnet ist, dass** außerdem und nach Anspruch 8 die programmierbare CPU (8) dank eines Beschleunigungsmessers (13) alle Systeme blockieren kann stromabwärts angeordnet und ihm jede Bewegung der Felge (1) mitteilt.

10. Autonome Multifunktions felge (1) in Verbindung mit einem Fernsteuersystem, das nach Anspruch 1 **dadurch gekennzeichnet ist, dass** Räume auf der Innenseite der Felge Kästen (19) enthalten können, die vom Benutzer abnehmbar sind.

## Claims

1. Autonomous multifunction rim (1) associated with a remote control system, usable in total independence and on any type of vehicle, **characterized in that** it comprises: a dedicated mobile application (5a); an electric charging system; a parking assistance and blind spot control system; a tire inflation system; a deflation system; a motion security and notification system; and a smartphone remote control system (5).

2. Autonomous multifunction rim (1) associated with a remote control system which according to claim 1 is **characterized in that** a programmable microprocessor (8), located on the rim (1) provides control and wireless communication between the various systems and the smartphone (5) of the user.

3. Autonomous multifunction rim (1) associated with a remote control system which according to claim 1 is **characterized in that** a mobile application (5a) dedicated and associated with a multifunction device (2) notifies in real time the tire pressure, park assist and blind spot control and allows on-demand control to inflate or deflate the tire (25).

4. Autonomous multifunction rim (1) associated with a remote control system which according to claim 1 is **characterized in that** a photovoltaic electric recharging system (6) of a battery (7a), is entirely located on the rim (1) and of which at least a part is located on the inner face and not visible from an outside point of view.

5. Autonomous multifunction rim (1) associated with a remote control system which according to claim 1 is **characterized in that** a distance sensor (11) passing through the thickness of the rim (1) and mounted perpendicular to the vertical plane of the rim outwards, makes it possible to detect any body approaching in front of the rim (1) and to inform the mobile application (5a) thereof by wireless communication directly via the associated CPU (10).

6. Autonomous multifunction rim (1) associated with a remote control system which according to claim 1 is **characterized in that** in one of the boxes (19), an air filter (23), an electric motor (14) remotely controllable and a micro-compressor (15) allows inflation of the tire (25) with ambient air (16).

7. Autonomous multifunction rim (1) associated with a remote control system which according to claim 1 is **characterized in that** a wireless pressure sensor (15) makes it possible to measure the air pressure of the tire (25 ) mounted on the rim (1) and directly inform the mobile application (5a) by wireless communication.

8. Autonomous multifunction rim (1) associated with a remote control system which according to claim 1 is **characterized in that** a solenoid valve (17), mounted downstream of the programmable CPU (8) and connected to the inflation hose (21), allows a controlled release of pressurized air in the tire 25.

9. Autonomous multifunction rim (1) associated with a remote control system which according to claim 1 is **characterized in that** furthermore and according to claim 8, the programmable CPU (8) can block all the systems thanks to an accelerometer (13) located downstream and informing it of any movement of the rim (1).

10. Autonomous multifunction rim (1) associated with a remote control system which according to claim 1 is **characterized in that** spaces on the inner face of the rim can contain boxes (19) detachable by the user.
